# FASCICULE DE BREVET EUROPEEN

(11) **EP 1 914 409 B1**
(45) Date de publication et mention de la délivrance du brevet: **24.02.2010**
(21) Numéro de dépôt: 07291140.7
(22) Date de dépôt: 25.09.2007
(51) Int. Cl.: F02D 13/02, F01L 13/00, F01L 9/04, F01L 1/047

(54) **Procédé de contrôle d'un moteur à combustion interne et moteur utilisant un tel procédé**
Brennkraftmaschinesteuerverfahren und Brennkraftmaschine zur Durchführung des Verfahrens
Internal combustion engine control method and engine using the method

(30) Priorité: 11.10.2006 FR 0608975
(43) Date de publication de la demande: 23.04.2008
(73) Titulaire: IFP, 92852 Rueil-Malmaison Cédex (FR)
(72) Inventeur: Duret, Pierre, 78500 Sartrouville (FR)

(56) Documents cités:
- US-A1- 2004 094 117
- US-B1- 6 561 145

## Description

La présente invention se rapporte à un procédé de contrôle d'un moteur à combustion interne et à un moteur utilisant un tel procédé:

Il est déjà connu des moteurs dans lesquels la ou les soupapes d'admission sont commandées en ouverture/fermeture par des moyens de commande avec une distribution variable. Dans ce type de distribution, l'arbre à cames classique est remplacé par un moyen d'actionnement dédié à chaque soupape, comme un actionneur à commande électromagnétique ou hydraulique ou électrohydraulique ou pneumatique ou électropneumatique, qui agit directement ou indirectement sur la tige de soupape. Ceci permet de changer tout aussi bien les angles et durées d'ouverture des soupapes d'admission que leurs lois de levées ou leur fréquence d'ouverture avec la possibilité de réaliser des multi ouvertures dans le même cycle de fonctionnement de ce moteur. A l'opposé, la ou les soupapes d'échappement sont commandées en ouverture/fermeture par tous moyens classiques de distribution comme un arbre à cames entraîné en rotation par une courroie (ou une chaîne de distribution) reliée au vilebrequin du moteur. Ce type de moteur avec deux architectures de distribution est plus connu sous la dénomination anglo-saxonne de "half camless".

De même, il est connu des moteurs, dit "full camless", qui ne comportent aucun arbre à cames tant pour les soupapes d'admission que pour les soupapes d'échappement. Dans ce cas, le moteur comprend un moyen d'actionnement dédié à chaque soupape, comme un actionneur à commande électromagnétique ou hydraulique ou électrohydraulique ou pneumatique ou électropneumatique, qui agit directement ou indirectement sur la tige de soupape des soupapes d'admission et d'échappement.

Dans ces deux types de moteurs, il est par exemple possible de réaliser, pour les faibles et moyennes charges, une combustion spécifique, telle qu'une combustion avec auto allumage contrôlé (en abrégé CAI pour Controled Auto Ignition) ou une combustion homogène à allumage par compression (mieux connue sous le vocable de HCCI pour Homogeneous Charge Compression Ignition), grâce à des phasages des soupapes d'admission et d'échappement qui permettent un ouverture/fermeture de ces soupapes avec réintroduction ou rétention de gaz brûlés dans la chambre de combustion, comme cela est mieux décrit dans la demande de brevet français N° 2 760 487 du demandeur sur la combustion avec auto allumage contrôlé.

Dans le cas d'un moteur "half camless" et cela compte tenu du fait que les soupapes d'échappement sont commandées par un arbre à cames, il est difficile de réaliser une telle combustion sur une plage de fonctionnement du moteur significative, car les lois de levées de ces soupapes d'échappement sont difficilement modifiables en fonctionnement ou ne peuvent être modifiées que sur une étendue très limitée.

Pour un moteur "full camless", l'inconvénient précité peut être résolu mais au détriment d'un coût excessif de réalisation de ce moteur avec la mise en place d'un actionneur pour chaque soupape d'échappement et d'admission associé à une commande très sophistiquée de ces actionneurs.
De plus dans le cas de charges moteur élevées, l'actionnement des soupapes d'échappement est difficile à réaliser compte tenu des contraintes imposées par les fortes contre-pressions à l'échappement.

II est également connu par le document US 2004/094117, un moteur qui comprend conventionnellement une tubulure d'admission avec sa soupape d'admission et une tubulure d'échappement avec sa soupape d'échappement. Ce moteur comprend en outre une tubulure auxiliaire débouchant dans la chambre de combustion du moteur en étant contrôlée par une soupape auxiliaire. Cette tubulure auxiliaire communique avec la tubulure d'admission par un premier conduit et avec la tubulure d'échappement par un second conduit. Une vanne est placée à l'intersection entre la tubulure auxiliaire et les conduits de façon à autoriser la circulation d'un fluide soit dans le premier conduit, soit dans le second conduit.

Pendant toutes les phases de fonctionnement du moteur, les soupapes d'admission et d'échappement agissent de manière conventionnelle en ouverture/fermeture alors que l'ouverture/fermeture de la soupape auxiliaire est commandée en fonction des besoins du moteur.
Ainsi, pendant la phase d'échappement du moteur, les gaz brûlés peuvent être dirigés par la tubulure auxiliaire vers la tubulure d'admission au travers du premier conduit pour obtenir une recirculation des gaz d'échappement à l'admission du moteur.
Pendant la phase de compression de ce moteur, le fluide comprimé contenu dans la chambre du cylindre est dirigé par la tubulure auxiliaire vers la tubulure d'échappement au travers du second conduit pour réaliser un frein moteur.
Dans un autre exemple se déroulant durant la phase d'échappement, les gaz d'échappement de la chambre de combustion sont évacués, dans un premier temps, par la tubulure auxiliaire mis en relation avec la tubulure d'échappement par le second conduit, puis, dans un deuxième temps, à la fois par cette tubulure auxiliaire et par la tubulure d'échappement.

Un tel moteur présente l'inconvénient de nécessiter une modification profonde de sa configuration avec une tubulure supplémentaire associée à une soupape ainsi que des moyens additionnels de commande de cette soupape.
Cela ne peut que grever fortement le coût excessif de fabrication d'un tel moteur avec la multiplicité des pièces à installer ainsi que de compliquer les procédures de contrôle des différentes soupapes en fonction des paramètres de fonctionnement du moteur.

La présente invention se propose de remédier aux inconvénients ci-dessus grâce à un procédé qui permet de faire fonctionner un moteur "half camless" comme un moteur "full camless" pour les faibles et moyennes charges.

A cet effet, la présente invention concerne un procédé de contrôle d'un moteur à combustion interne comprenant au moins un cylindre avec au moins un moyen d'échappement de gaz brûlés comportant une soupape d'échappement contrôlée en ouverture/fermeture par des moyens de commande et une tubulure d'échappement raccordée à une ligne d'échappement, au moins deux moyens d'admission comportant chacun une soupape contrôlée en ouverture/fermeture par un moyen d'actionnement dédié et une tubulure, **caractérisé en ce qu**'il consiste, lors du fonctionnement à faibles charges ou à charges moyennes du moteur, :
- à commander en position de fermeture la soupape d'échappement;
- à contrôler l'une des soupapes d'admission de manière à la faire fonctionner en tant que soupape d'évacuation des gaz brûlés.

Le procédé peut consister à évacuer les gaz brûlés vers la ligne d'échappement par l'intermédiaire d'un conduit.

Le procédé peut également consister à obturer l'embouchure de la tubulure comportant la soupape d'évacuation.

L'invention concerne aussi un moteur à combustion interne avec au moins un cylindre muni d'au moins un moyen d'échappement de gaz brûlés avec une soupape d'échappement contrôlée en ouverture/fermeture par des moyens de commandes et une tubulure d'échappement, une ligne d'échappement, et au moins deux moyens d'admission comportant chacun une tubulure, une soupape contrôlée en ouverture/fermeture par un moyen d'actionnement dédié, et des moyens de contrôle pour les moyens de commande de la soupape d'échappement et pour les moyens de commande de l'une des soupapes des moyens d'admission pour changer les loi de levée desdites soupapes de façon à ce que la soupape d'admission agisse en tant que soupape d'évacuation des gaz brûlés alors que la soupape d'échappement reste en position de fermeture.

Ce moteur peut comprendre un conduit reliant la tubulure du moyen d'admission comportant la soupape d'évacuation à la ligne d'échappement.

La tubulure du moyen d'admission comportant la soupape d'évacuation peut porter un moyen d'obturation de l'embouchure de ladite tubulure.

Les moyens de commande de la soupape d'échappement portent des moyens de débrayage permettant de rendre actifs ou inactifs lesdits moyens de commande.

L'invention peut concerner une utilisation du procédé pour une combustion avec auto allumage contrôlé du moteur.

Elle peut aussi concerner une utilisation du procédé pour une combustion homogène avec allumage par compression du moteur.

De manière avantageuse, elle peut être utilisé pour un fonctionnement du moteur en multi-temps ou pour un pour un fonctionnement du moteur avec frein-moteur.

Une autre utilisation du procédé peut concerner un fonctionnement du moteur dans des conditions de démarrage à froid pour réduire les émissions polluantes.

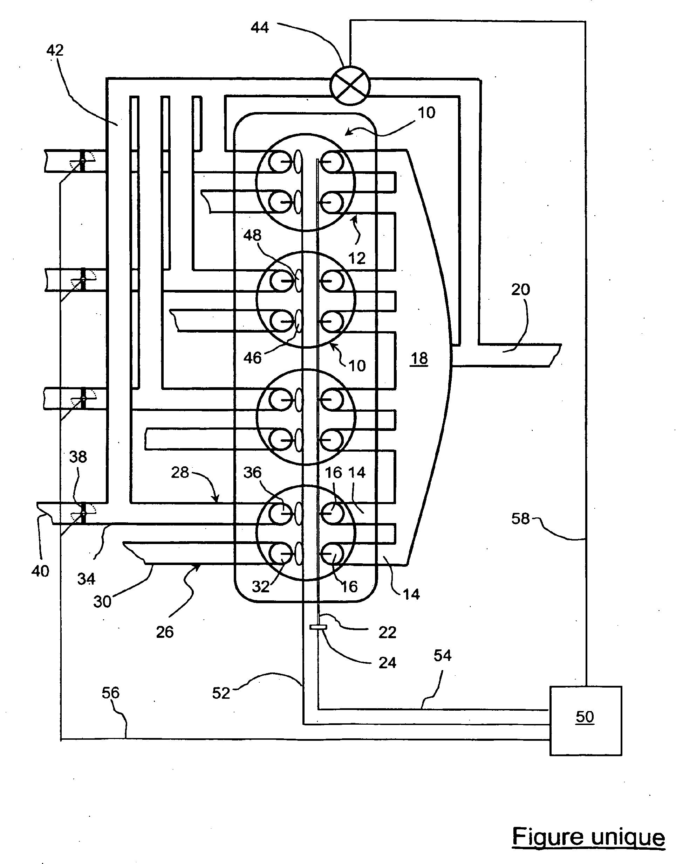

Les autres caractéristiques et avantages de l'invention vont apparaître à la lecture de la description qui va suivre, donnée uniquement à titre illustratif et non limitatif, et à laquelle est annexée une figure unique montrant un moteur "half camless" utilisant le procédé de l'invention.

La description qui va suivre donnera un exemple de réalisation de l'invention applicable à un moteur à combustion interne de type Diesel, éventuellement suralimenté, mais n'écarte en aucune manière tout autre type de moteur à combustion interne, notamment celui à allumage commandé.

Sur la figure unique, le moteur à combustion interne comprend au moins un cylindre 10, ici quatre cylindres, comportant une chambre de combustion dans laquelle se produit la combustion d'un mélange carburé.

Ce cylindre comporte au moins un moyen d'échappement 12 des gaz brûlés, ici deux, comprenant une tubulure d'échappement 14 et un moyen d'obturation, comme une soupape d'échappement 16. Les tubulures d'échappement 14 aboutissent à une ligne d'échappement avec un collecteur d'échappement 18 raccordé à un tuyau d'échappement 20 permettant l'évacuation des gaz brûlés issus des chambres de combustion et éventuellement leurs traitements de dépollution. Les soupapes d'échappement 16 sont commandées en ouverture et en fermeture par tous moyens connus, tels qu'un arbre à cames 22, entraîné en rotation de manière synchrone avec le vilebrequin par une courroie ou une chaîne de distribution (non représentés). Cet arbre à cames porte des moyens de débrayage 24 de l'ouverture des soupapes d'échappement comme par exemple ceux qui permettent de le désolidariser de la courroie (ou de la chaîne) de distribution. Ces moyens de débrayage permettent d'interrompre la rotation de l'arbre à cames et ainsi de le rendre inactif sur les soupapes d'échappement de manière à ce qu'elles restent en position de fermeture.
D'autres moyens peuvent être utilisés comme par exemple un débrayage hydraulique de l'actionnement par cames, plus connus sous le nom de désactivation de l'ouverture des soupapes.

Ce cylindre comprend également au moins deux moyens d'admission 26, 28 dont l'un 28 est utilisé en tant que moyen d'évacuation des gaz brûlés lorsque le moteur fonctionne à faibles ou moyennes charges, comme cela sera explicité plus en détail dans la suite de la description.
Le moyen d'admission 26, dit moyen d'admission classique, comprend une tubulure d'admission 30 associée à un moyen d'obturation, tel qu'une soupape d'admission 32.

Le moyen d'admission 28, dit moyen d'admission/évacuation, comprend un tubulure d'admission/évacuation 34 et une soupape d'admission/évacuation 36. La tubulure d'admission/évacuation 34 porte un volet 38, de préférence à position bistable (pleine ouverture ou pleine fermeture), placé en amont de l'embouchure 40 de cette tubulure et permettant de contrôler toute circulation de fluide dans la tubulure de et vers cette embouchure. Un conduit 42 prend naissance à la tubulure d'admission/évacuation 34 entre la soupape d'admission/évacuation 36 et le volet 38 et aboutit sur le collecteur d'échappement 18 ou, dans le cas de l'exemple représenté, sur le tuyau d'échappement 20. Ce conduit porte une vanne 44, de préférence à ouverture variable, disposée entre l'origine du conduit 42 et son arrivée sur le tuyau d'échappement 20, et permet de contrôler la circulation de fluide dans ce conduit.

Chaque soupape d'admission 32 et d'admission/évacuation 36 est commandée en ouverture et fermeture par un moyen d'actionnement dédié, respectivement 46 et 48, permettant de réaliser une distribution totalement variable ou pour le moins permettant de faire varier le phasage de ces soupapes et leurs durées d'ouverture/fermeture. Pour ce faire, il pourra être utilisé des actionneurs électromagnétiques ou des actionneurs hydrauliques voire électrohydrauliques, pneumatiques ou électropneumatiques qui agissent sur la tige de la soupape qu'ils commandent. Pour des raisons de simplification dans la suite de la description, il sera fait mention d'actionneurs électromagnétiques pour la commande des soupapes d'admission et d'admission/évacuation.

Bien entendu et cela sans sortir du cadre de l'invention, les embouchures des tubulures d'admission 30 et d'admission/évacuation 40 peuvent être reliées à un même collecteur d'admission (non représenté) de façon à pouvoir bénéficier des différents éléments opérationnels du moteur, comme la filtration de l'air d'admission ou sa suralimentation.

Ce moteur comprend également une unité de calcul 50, dite calculateur-moteur, qui contient des cartographies ou des tables de données permettant d'évaluer, en fonction des paramètres du moteur, comme le régime du moteur, sa charge ou les pressions d'admission et d'échappement, la puissance que doit générer ce moteur pour répondre à la demande du conducteur du véhicule et par conséquent de gérer les conditions souhaitées de fonctionnement de ce moteur, de faibles charges à moyennes charges ou de fortes charges à très fortes charges.
Plus précisément, ce calculateur-moteur permet, en fonction de ces conditions de fonctionnement, de contrôler les lois de levée de soupapes d'admission 32 et d'admission/évacuation 36 par une ligne de commande 52 agissant sur les actionneurs électromagnétiques 46 et 48, de rendre actif ou inactif l'arbre à cames échappement 22 en agissant par une ligne de commande 54 sur les moyens de débrayage 24, de commander les volets 38 en pleine ouverture ou en pleine fermeture par une ligne 56 et de contrôler la vanne 44 par une ligne 58.

Ainsi, lors du fonctionnement du moteur en mode conventionnel, généralement avec des charges élevées à des charges très élevées, celui-ci fonctionne en tant que moteur "half camless" avec l'utilisation de l'arbre à cames 22 pour les soupapes d'échappement 16 et des actionneurs électromagnétiques 46 et 48 pour les soupapes d'admission 32 et d'admission/évacuation 36.

Plus précisément, par la ligne 54 agissant sur les moyens de débrayage 24, le calculateur-moteur 50 rend (ou laisse) opérationnel l'arbre à cames 22 qui commande, de façon classique, l'ouverture et la fermeture des soupapes d'échappement durant la phase échappement du moteur. Ce calculateur-moteur commande également les actionneurs 46 et 48 par la ligne 52 de manière à ce que la distribution en ouverture/fermeture des soupapes d'admission 32 et d'admission/évacuation 36 se réalise de manière classique avec un fonctionnement en tant que soupape d'admission pour la soupape 36. De même, le calculateur-moteur 50 commande par la ligne 56 les volets 38 pour qu'ils se trouvent dans une configuration de pleine ouverture de l'embouchure 40 de la tubulure d'admission/évacuation 34. Enfin, ce calculateur-moteur agit sur la vanne 44 dans le cas où il est nécessaire de réinjecter des gaz brûlés à l'admission, opération qui est plus connue par l'homme du métier sous le sigle de EGR (Exhaust Gas Recirculation).

Dans cette configuration, le moyen d'admission/évacuation 28 est utilisée en tant que moyen d'admission d'air et le conduit 42 avec sa vanne 44 peut être utilisé, en tant que conduit EGR, pour mélanger une partie des gaz brûlés circulant dans la ligne d'échappement avec l'air d'admission pour réaliser un mélange air/gaz chauds favorisant la combustion du mélange carburé dans la chambre de combustion de chaque cylindre et réduisant les émission de polluants.
Ainsi, l'air admis par les tubulures 30 et 34, et éventuellement additionné d'une quantité de gaz brûlés par le conduit 42, pénètre dans la chambre de combustion du cylindre 10 puis une combustion est réalisée après injection d'un carburant et compression du mélange carburé. Les gaz brûlés résultant de cette combustion sont ensuite classiquement évacués de la chambre de combustion lors de l'ouverture des soupapes d'échappement 16 sous l'action de l'arbre à cames 22.

Pendant la période de fonctionnement à faibles charges (ou jusqu'aux charges moyennes), comme pour le fonctionnement au ralenti du moteur, le calculateur-moteur commande les différents organes du moteur (moyens de débrayage 24, actionneurs électromagnétiques, volets 38 et vanne 44) pour passer d'un fonctionnement avec un moteur "half camless" à un fonctionnement avec un moteur "full camless" où seuls les actionneurs 46 et 48 sont utilisés. Cela a pour avantage de réduire la consommation de carburant ainsi que les émissions de polluants et peut permettre d'accroître la capacité de frein-moteur.

Pour ce faire, le calculateur-moteur 50 rend inactif l'arbre à cames 22 par le moyen de débrayage 24 en le découplant de la courroie ou de la chaîne de distribution qui l'entraîne en rotation. Dans ce cas, les soupapes d'échappement 16 restent constamment fermées (une autre solution consisterait à maintenir l'arbre à cames en rotation et de désactiver l'ouverture des soupapes par une commande hydraulique). Simultanément, le calculateur-moteur commande en fermeture l'embouchure de la tubulure d'admission/évacuation 34 par un positionnement en pleine fermeture du volet 38, comme indiqué en traits forts sur la figure, pour fermer tout circulation vers cette embouchure 40 et ouvre la vanne 44 de façon à permettre la circulation de fluide dans le conduit 42.
Dans cette configuration, le moteur ne fonctionne qu'avec les deux soupapes 32 et 36. La soupape d'admission 32 permet d'introduire de l'air dans la chambre de combustion pour la tubulure 30 alors que la soupape d'admission/évacuation 36 est utilisée en tant que soupape d'évacuation (ou d'échappement) des gaz brûlés résultant de la combustion du mélange carburé dans la chambre de combustion du cylindre. Ces gaz brûlés sont évacués au travers de cette soupape, circulent alors dans la portion de la tubulure 28 fermée par le volet 38 puis dans le conduit 42 pour être dirigés enfin dans le tuyau d'échappement 20, c'est à dire en sens inverse du mode conventionnel lorsque ce conduit est utilisé en tant que conduit EGR.

Ainsi, grâce à cette configuration du moteur en "full camless", il est envisageable de réaliser toutes les possibilités de phasage des soupapes d'admission et d'échappement qui permettent une ouverture/fermeture de ces soupapes avec réintroduction ou rétention de gaz brûlés dans la chambre de combustion. Ceci permet ainsi, dans le cas de combustion à autoallumage contrôlé ou de combustion homogène par compression, de réaspirer et retenir les gaz brûlés dans la chambre de combustion pour ensuite les comprimer.

Avantageusement, il peut être également envisagé d'utiliser le procédé selon l'invention pour faire fonctionner un moteur selon un mode multi-temps, ou pour réaliser un frein-moteur de ce moteur.

Pour obtenir le fonctionnement de ce moteur suivant le cycle 2 temps, il suffit par exemple de doubler la fréquence d'ouverture des soupapes 32 et 36 avec des lois d'ouvertures adaptées. Ceci a pour avantage de réduire la puissance indiquée produite à chaque cycle moteur et ainsi permet d'augmenter la zone de charge ou le fonctionnement en CAI ou en HCCl peut être obtenu.

Pour la réalisation d'un frein-moteur, les lois de levée d'ouverture des soupapes 32 et 36 sont prévues pour que le mélange gazeux admis dans la chambre de combustion soit comprimé jusqu'au Point Mort Haut. A partir de cette configuration, il suffit d'ouvrir la soupape 36 en fin de compression pour perdre l'énergie qui a servi à la compression du mélange gazeux et il en résulte un travail négatif de compression des gaz qui fera office de frein-moteur.

Il peut aussi être envisagé d'utiliser le procédé suivant l'invention lors du démarrage à froid du moteur.
Ainsi, il est possible, avec des lois d'ouvertures des soupapes dédiées, de réduire les émissions de polluants par augmentation du taux de gaz brûlés résiduels retenus et en conséquence par élévation de la température de la charge enfermée et comprimée dans la chambre de combustion.

La présente invention n'est pas limitée à l'exemple de réalisation décrit ci-dessus mais englobe toutes variantes et tous équivalents sans sortir du cadre des revendications indépendantes.

## Revendications

1. Procédé de contrôle d'un moteur à combustion interne comprenant au moins un cylindre (10) avec au moins un moyen d'échappement (12) de gaz brûlés comportant une soupape d'échappement (16) contrôlée en ouverture/fermeture par des moyens de commande (22) et une tubulure d'échappement (14) raccordée à une ligne d'échappement (18, 20), au moins deux moyens d'admission (26, 28) comportant chacun une soupape (32, 36) contrôlée en ouverture/fermeture par un moyen d'actionnement dédié (46, 48) et une tubulure (30, 34), **caractérisé en ce qu'**il consiste, lors du fonctionnement à faibles charges ou à charges moyennes du moteur, :
- à commander en position de fermeture la soupape d'échappement (16);
- à contrôler l'une (36) des soupapes d'admission de manière à la faire fonctionner en tant que soupape d'évacuation des gaz brûlés.

2. Procédé de contrôle d'un moteur selon la revendication 1, **caractérisé en ce qu'**il consiste à évacuer les gaz brûlés vers la ligne d'échappement (18, 20) par l'intermédiaire d'un conduit (42).

3. Procédé de contrôle d'un moteur selon la revendication 1, **caractérisé en ce qu'**il consiste à obturer l'embouchure (40) de la tubulure (34) comportant la soupape d'évacuation (36).

4. Moteur à combustion interne avec au moins un cylindre (10) muni d'au moins un moyen d'échappement (12) de gaz brûlés avec une soupape d'échappement (16) contrôlée en ouverture/fermeture par des moyens de commande (22) et une tubulure d'échappement (14), une ligne d'échappement (18, 20), au moins deux moyens d'admission (26, 28) comportant chacun une tubulure (30, 34) et une soupape (32, 36) contrôlée en ouverture/fermeture par un moyen d'actionnement dédié (46, 48), et des moyens de contrôle (50) pour les moyens de commande (22) de la soupape d'échappement et pour les moyens de commande (48) de l'une (36) des soupapes des moyens d'admission **caractérisé en ce que** les moyens de contrôle sont adaptés pour changer les lois de levée desdites soupapes de façon à ce que la soupape d'admission agisse en tant que soupape d'évacuation des gaz brûlés alors que la soupape d'échappement reste en position de fermeture.

5. Moteur à combustion interne selon la revendication 4, **caractérisé en ce qu'**il comprend un conduit (42) reliant la tubulure du moyen d'admission (28) comportant la soupape d'évacuation (36) à la ligne d'échappement (18, 20).

6. Moteur à combustion interne selon la revendication 4 ou 5, **caractérisé en ce que** la tubulure (34) du moyen d'admission (28) comportant la soupape d'évacuation (36) porte un moyen d'obturation (38) de l'embouchure (40) de ladite tubulure.

7. Moteur à combustion interne selon la revendication 4, **caractérisé en ce que** les moyens de commande (22) de la soupape d'échappement (16) portent des moyens de débrayage (24) permettant de rendre actifs ou inactifs lesdits moyens de commande.

8. Utilisation du procédé selon l'une des revendications 1 à 3 pour une combustion avec auto allumage contrôlé du moteur.

9. Utilisation du procédé selon l'une des revendications 1 à 3 pour une combustion homogène avec allumage par compression du moteur.

10. Utilisation du procédé selon l'une des revendications 1 3 à pour un fonctionnement du moteur en multi-temps.

11. Utilisation du procédé selon l'une des revendications 1 à 3 pour un fonctionnement du moteur avec frein-moteur.

12. Utilisation du procédé selon l'une des revendications 1 à 3 pour un fonctionnement du moteur dans des conditions de démarrage à froid pour réduire les émissions polluantes.

## Claims

1. A method for controlling an internal combustion engine including at least one cylinder (10) with at least one exhaust means (12) for burnt gases comprising an exhaust valve (16) of which the opening and closing is controlled by actuation means (22) and an exhaust pipe (14) connected to an exhaust line (18, 20), at least two intake means (26, 28) each comprising a valve (32, 36) of which the opening and closing is controlled by a dedicated activation means (46, 48) and a pipe (30, 34), **characterised in that** it consists, during functioning at low engine loads or at average engine loads, in:
- actuating the exhaust valve (16) into a closed position;
- controlling one (36) of the intake valves so that it acts as a valve for discharging burnt gases.

2. The method for controlling an engine according to Claim 1, **characterised in that** it consists in discharging the burnt gases towards the exhaust line (18, 20) via a conduit (42).

3. The method for controlling an engine according to Claim 1, **characterised in that** it consists in closing off the mouth (40) of the pipe (34) comprising the discharge valve (36).

4. The internal combustion engine with at least one cylinder (10) equipped with at least one burnt gas exhaust means (12) with an exhaust valve (16) of which the opening and closing is controlled by actuation means (22) and an exhaust pipe (14), an exhaust line (18, 20), at least two intake means (26, 28) each comprising a pipe (30, 34) and a valve (32, 36) of which the opening and closing is controlled by a dedicated activation means (46, 48), and control means (50) for the actuation means (22) of the exhaust valve and for the actuation means (48) of one (36) of the valves of the intake means, **characterised in that** the control means are adapted to change the lifting laws of said valves such that the intake valve acts as a burnt gas discharge valve whereas the exhaust valve remains in a closed position.

5. The internal combustion engine according to Claim 4, **characterised in that** it comprises a conduit (42) connecting the pipe of the intake means (28) comprising the discharge valve (36) to the exhaust line (18, 20).

6. The internal combustion engine according to claim 4 or 5, **characterised in that** the pipe (34) of the intake means (28) comprising the discharge valve (36) bears a means (38) for closing off the mouth (40) of said pipe.

7. The internal combustion engine according to Claim 4, **characterised in that** the actuation means (22) of the exhaust valve (16) bear disengagement means (24) which make it possible to activate or deactivate said control means.

8. Use of the method according to one of claims 1 to 3 for a combustion with controlled auto-ignition of the engine.

9. The use of the method according to one of claims 1 to 3 for a homogeneous combustion with ignition by compression of the engine.

10. The use of the method according to one of claims 1 to 3 for multi-time operation of the engine.

11. The use of the method according to one of claims 1 to 3 for an operation of the engine with engine braking.

12. The use of the method according to one of claims 1 to 3 for an operation of the engine under cold start conditions in order to reduce polluting emissions.

## Patentansprüche

1. Verfahren zur Steuerung eines Verbrennungsmotors, umfassend mindestens einen Zylinder (10) mit mindestens einem Auslassmittel (12) für verbrannte Gase, umfassend ein Auslassventil (16), dessen Öffnung/Schließung durch Betätigungsmittel (22) gesteuert wird, und einen Auslassstutzen (14), der mit einer Auspuffleitung (18, 20) verbunden ist, mindestens zwei Einlassmittel (26, 28), jedes umfassend ein Ventil (32, 36), dessen Öffnung/Schließung durch ein zugeordnetes Betätigungsmittel (46, 48) gesteuert wird, und einen Stutzen (30, 34), **dadurch gekennzeichnet, dass** es darin besteht, in einem Niederlast- oder Mittellastbetrieb des Motors:
- das Auslassventil (16) so zu steuern, dass es in die geschlossene Position gestellt wird;
- eines der Einlassventile (36) so zu steuern, dass es als Auslassventil der verbrannten Gase wirkt.

2. Verfahren zur Steuerung eines Verbrennungsmotors nach Anspruch 1, **dadurch gekennzeichnet, dass** es darin besteht, die verbrannten Gase durch eine Leitung (42) zur Auspuffleitung (18, 20) auszulassen.

3. Verfahren zur Steuerung eines Verbrennungsmotors nach Anspruch 1, **dadurch gekennzeichnet, dass** es darin besteht, die Mündung (40) des Stutzens (34), der das Auslassventil (36) umfasst, abzusperren.

4. Verbrennungsmotor mit mindestens einem Zylinder (10), versehen mit mindestens einem Auslassmittel (12) für verbrannte Gase mit einem Auslassventil (16), dessen Öffnung/ Schließung durch Betätigungsmittel (22) gesteuert wird, und einem Auslassstutzen (14), einer Auspuffleitung (18, 20), mindestens zwei Einlassmitteln (26, 28), jedes umfassend einen Stutzen (30, 34) und ein Ventil (32, 36), dessen Öffnung/Schließung durch ein zugeordnetes Betätigungsmittel (46, 48) gesteuert wird, und Steuermittel (50) für die Betätigungsmittel (22) des Auslassventils und für die Betätigungsmittel (48) eines (36) der Ventile der Einlassmittel, **dadurch gekennzeichnet, dass** die Steuermittel geeignet sind, den Hubverlauf dieser Ventile derart zu ändern, dass das Einlassventil als Auslassventil der verbrannten Gase wirkt, während das Auslassventil in geschlossener Position bleibt.

5. Verbrennungsmotor nach Anspruch 4, **dadurch gekennzeichnet, dass** er eine Leitung (42) umfasst, die den Stutzen des Auslassmittels (28), das das Auslassventil (36) umfasst, mit der Auspuffleitung (18, 20) verbindet.

6. Verbrennungsmotor nach Anspruch 4 oder 5, **dadurch gekennzeichnet, dass** der Stutzen (34) des Auslassmittels (28), das das Auslassventil (36) umfasst, ein Mittel zur Absperrung (38) der Mündung (40) dieses Stutzens trägt.

7. Verbrennungsmotor nach Anspruch 4, **dadurch gekennzeichnet, dass** die Betätigungsmittel (22) des Auslassventils (16) Entkupplungsmittel (24) tragen, die es erlauben, diese Betätigungsmittel zu aktivieren oder zu deaktivieren.

8. Verwendung des Verfahrens nach einem der Ansprüche 1 bis 3 für eine Verbrennung mit geregelter Selbstzündung des Motors.

9. Verwendung des Verfahrens nach einem der Ansprüche 1 bis 3 für eine homogene Verbrennung mit Kompressionszündung des Motors.

10. Verwendung des Verfahrens nach einem der Ansprüche 1 bis 3 für einen Mehrtaktbetrieb des Motors.

11. Verwendung des Verfahrens nach einem der Ansprüche 1 bis 3 für einen Betrieb des Motors mit Motorbremse.

12. Verwendung des Verfahrens nach einem der Ansprüche 1 bis 3 für einen Betrieb des Motors unter Kaltstartbedingungen, um Schadstoffemissionen zu reduzieren.
